# EUROPÄISCHE PATENTSCHRIFT

(11) **EP 3 041 732 B1**
(45) Veröffentlichungstag und Bekanntmachung des Hinweises auf die Patenterteilung: **15.11.2017**
(21) Anmeldenummer: 13766221.9
(22) Anmeldetag: 02.09.2013
(51) Int. Cl.: B62J 1/08, B60C 23/10, B62J 11/02

(54) **VORRICHTUNG ZUM LÖSBAREN ANEINANDER FESTLEGEN VON ZWEI GEGENEINANDER BEWEGBAREN TEILEN EINER FAHRRADPUMPE**
DEVICE FOR DETACHABLY FIXING TWO PARTS OF A BICYCLE PUMP TO EACH OTHER, WHICH PARTS CAN BE MOVED IN RELATION TO EACH OTHER
DISPOSITIF POUR FIXER L'UNE À L'AUTRE DE FAÇON AMOVIBLE DEUX PARTIES D'UNE POMPE DE BICYCLETTE MOBILES L'UNE PAR RAPPORT À L'AUTRE

(43) Veröffentlichungstag der Anmeldung: 13.07.2016
(73) Patentinhaber: Re.mo.bic. GmbH, 2130 Mistelbach (AT)
(72) Erfinder: HAAGER, Alexander, AT-2130 Mistelbach (AT)
(74) Vertreter: Cunow, Gerda
(86) Internationale Anmeldenummer: PCT/AT2013/000142
(87) Internationale Veröffentlichungsnummer: WO 2015/027250

(56) Entgegenhaltungen:
- EP-A1- 2 003 047
- WO-A1-2009/155628
- CN-U- 2 032 587
- FR-A- 606 092
- US-A- 679 512

## Beschreibung

Die vorliegende Erfindung bezieht sich auf eine Vorrichtung zum lösbaren aneinander Festlegen von zwei gegeneinander bewegbaren Teilen einer eine Sattelstütze ausbildenden Vorrichtung zum Generieren von Druckluft zum Befüllen von Fahrradreifen, wobei die zwei gegeneinander bewegbaren Teile der Sattelstütze aus einer eine Pumpenstange umgebenden Hülse und einem Pumpenkolben gebildet sind.

Fahrradpumpen, welche als Bestandteile des Fahrrads ausgebildet sind, sind in den verschiedensten Ausbildungen bzw. Ausführungen bekannt und sind sowohl in dem Rahmen, der Gabel oder der Sattelstütze eines Fahrrads integriert oder bilden beispielsweise die Sattelstütze aus, sodass ein Fahrradsattel über eine spezielle Befestigungsvorrichtung direkt an der Fahrradpumpe festgelegt werden kann.

Eine derartige Vorrichtung ist beispielsweise aus der EP 2 288 535 B1 bekannt geworden, bei welcher die Fahrradpumpe in den verschiedensten Bereichen eines Fahrrades, wie beispielsweise der Gabel, integriert sein kann oder die Pumpe bildet die Sattelstütze für den Fahrradsattel aus. Nachteilig an dieser bekannten Vorrichtung ist, dass die gegeneinander bewegbaren Teile, der eine Sattelstütze ausbildenden Vorrichtung, zum Generieren von Druckluft mittels einer Verriegelung, welche aus einem Rastbolzen gebildet ist, fixiert werden. Im Betrieb eines mit einer derartigen Sattelstütze versehenen Fahrrades und insbesondere bei Fahren im unebenen Gelände werden massive Stöße auf diesen Rastbolzen ausgeübt, wodurch es nach relativ kurzen Betriebsdauern zu einem Brechen oder auch Verbiegen des Stiftes des Rastbolzens kommt, worauf die Fahrradpumpe entweder einer Reparatur unterzogen werden muss oder soweit unbrauchbar gemacht ist, dass die Pumpelemente, welche an sich vollständig unbeschädigt sind, ebenso wie die gesamte Sattelstütze ausgetauscht werden müssen.

Aus der FR 606 092 ist eine Fahrradpumpe, welche in dem Rahmen des Fahrrads und insbesondere in der Sattelstütze des Fahrrads angeordnet ist, welche Fahrradpumpe in ihrem oberen Bereich einen aufgeschweißten Ring aufweist, wobei die Sattelstütze bzw. der Rahmen des Fahrrads durch einen daran ausgebildeten Dorn als Anschlag für diesen Ring dient und dadurch zusätzlich den Pumpenkörper an einem unbeabsichtigten Verdrehen hindert.

Die vorliegende Erfindung zielt nun darauf ab, eine Vorrichtung zum lösbaren aneinander Festlegen von zwei gegeneinander bewegbaren Teilen einer eine Sattelstütze ausbildenden Vorrichtung zum Generieren von Druckluft zur Verfügung zu stellen, welche auch bei größten Belastungen die zueinander bewegbaren Teile während des Fahrens zuverlässig in einem verriegelten und miteinander verbundenen Zustand hält und welche leicht und zuverlässig eine Vielzahl von Malen öffen- und verschließbar ist.

Zur Lösung dieser Aufgabe ist die erfindungsgemäße Vorrichtung im Wesentlichen dadurch gekennzeichnet, dass ein einem Fahrradsattel zugewandter, im Wesentlichen zylindrischer Endbereich des Pumpenkolbens mit einem gegenüber dem in der Hülse geführten Teil desselben vergrößerten Durchmesser ausgebildet ist, dass der Bereich vergrößerten Durchmessers und ein freier Endbereich der Hülse von einer in einem Endbereich mit einem Innengewinde versehenen Überwurfmutter umgeben sind und das Innengewinde der Überwurfmutter mit einem an der Hülse oder am Bereich vergrößerten Durchmessers des Pumpenkolbens angeordneten Gewinde lösbar verbindbar ist, dass die Überwurfmutter einen dem Innengewinde benachbarten, ihren Innendurchmesser verringernden ringförmigen Anschlag aufweist und dass ein einen Außendurchmesser von entweder der Hülse oder den Bereich vergrößerten Durchmessers des Pumpenkolbens vergrößernder Anschlag zur Wechselwirkung mit dem Anschlag der Überwurfmutter ausgebildet ist. Indem ein einem Fahrradsattel zugewandter im Wesentlichen zylindrischer Endbereich des Pumpenkolbens mit einem gegenüber dem in der Hülse geführten Teil desselben vergrößerten Durchmesser ausgebildet ist, wird sichergestellt, dass ein unbeabsichtigtes und insbesondere durch Belastungen verursachtes Anschlagen eines unteren Endbereichs der Hülse an weiteren Elementen der Fahrradpumpe vermieden wird, sodass eine Zerstörung von im Inneren der Hülse angeordneten Elementen der Fahrradpumpe, wie beispielsweise einer Pumpenstange und dgl. mit Sicherheit vermieden wird. Indem weiterhin der Bereich des vergrößerten Durchmessers und ein freier Endbereich der Hülse von einer in einem Endbereich mit einem Innengewinde versehenen Überwurfmutter umgeben sind und das Innengewinde der Überwurfmutter mit einem an der Hülse oder der am Bereich vergrößerten Durchmessers des Pumpenkolbens angeordneten Gewinde lösbar verbindbar ist, wird eine Verbindung zwischen der Überwurfmutter und einem der zwei gegeneinander bewegbaren Teile geschaffen, welche gegen Stöße und insbesondere bei Stoßbeanspruchung, wie sie beispielsweise bei einem Mountainbike fahren auftritt, nicht zerstörbar ist und auch nicht unbeabsichtigt gelöst werden kann. Indem weiterhin die Überwurfmutter selbst einen dem Innengewinde benachbarten ihren Innendurchmesser verringerten ringförmigen Anschlag aufweist und ein den Außendurchmesser von entweder der Hülse oder dem Bereich vergrößerten Durchmessers des Pumpenkolbens vergrößernder Anschlag zur Wechselwirkung mit dem Anschlag der Überwurfmutter ausgebildet ist, wird eine Verbindung zwischen den zwei bewegbaren Teilen einer Fahrradpumpe geschaffen, welche insbesondere gegen Stoßbelastungen vollständig unempfindlich ist. Durch Festlegen der Überwurfmutter an einem Anschlag eines der beiden zueinander bewegbaren Teile und Festschrauben derselben Überwurfmutter an dem zweiten der zueinander bewegbaren Teile gelingt es somit ein lösbares aneinander festlegen der beiden zueinander bewegbaren Teile, welches jederzeit wieder gelöst werden kann und welche lösbare Verbindung auch bei größten Belastungen nicht ausgerissen oder verbogen werden kann, sodass eine Sattelstütze zur Verfügung gestellt wird, welche in der Lebensdauer und Belastbarkeit einer herkömmlichen Sattelstütze vergleichbar ist und welche überdies als Fahrradpumpe einsetzbar ist, sodass nicht nur das Gesamtgewicht des Fahrrades verringert wird, sondern eine elegante und ästhetische Lösung gefunden wurde, mit welcher eine Fahrradpumpe an bzw. in einem Fahrrad festgelegt werden kann, ohne dass irgendwelche Verschlechterungen bzw. Schwächungen des Fahrradrahmens durch Ausbilden von beispielsweise Löchern in dem Rahmen, Schlitzen für ein Verschieben von Elementen der Fahrradpumpe und dgl. erforderlich wurden.

Es erübrigt sich festzuhalten, dass eine derartige als Sattelstütze ausgebildete Fahrradpumpe selbstverständlich wie jede herkömmliche Sattelstütze in dem Fahrradrahmen in verschiedenen Höhen festgelegt werden kann, um die Sitzhöhe des Fahrrades an den Benutzer anzupassen.

Um insbesondere im geöffneten Zustand der Überwurfmutter, d.h. während der Betätigung der Vorrichtung zum Generieren von Druckluft oder, wenn die Bereitschaft zum Aufpumpen eines Fahrradreifens besteht, zu gewährleisten, dass die Überwurfmutter nicht beispielsweise mit jeder Pumpenbewegung hin- und herrutscht und beispielsweise Kratzer in der Lackierung der Sattelstütze verursacht, wodurch nicht nur eine ästhetische Beeinträchtigung verursacht wird sondern auch die Lebensdauer der Pumpe verkürzt werden kann, ist die Erfindung dahingehend weitergebildet, dass die Überwurfmutter die Hülse umgebend angeordnet ist und dass die Hülse beabstandet von dem Bereich vergrößerten Durchmessers ein weiteres den Außendurchmesser der Hülse vergrößerndes Element aufweist. Ein derartiges unbeabsichtigtes Verschieben der Hülse wird durch das Vorsehen eines den Außendurchmesser der Hülse vergrößernden Elementes vermieden, welches Element als Anschlag für die Überwurfmutter dahingehend dient, dass die Überwurfmutter nicht beliebig entlang der Hülse bewegt werden kann.

Indem, wie dies einer Weiterbildung der Erfindung entspricht, so vorgegangen wird, dass das weitere den Außendurchmesser der Hülse vergrößernde Element ein rückstellfähiges in eine Nut der Hülse eingelegtes Element, insbesondere ein elastischer Ring oder ein Sprengring ist, kann auch insbesondere bei Vorsehen eines elastischen Ringes eine Geräuschdämpfung der noch möglichen Bewegung der Überwurfmutter erzielt werden, sodass auch während eines Pumpens jegliches Klappern oder Scheppern der Überwurfmutter vermieden ist. Es gelingt somit nicht nur einen sicheren Halt zwischen den bewegbaren Teilen der Fahrradpumpe zur Verfügung zu stellen sondern überdies auch eine einfach betätigende Vorrichtung, die neben einem ästhetischen Äußeren auch für sowohl dem Einsatz im Rennbereich als auch im Hobbybereich sicher und zuverlässig funktioniert und einfach betätigbar ist.

Zur weiteren Sicherung und insbesondere, um auch ein unbeabsichtigtes Aufdrehen der Überwurfmutter mit Sicherheit hintanzuhalten, ist die Erfindung dahingehend weitergebildet, dass die Überwurfmutter wenigstens eine den Anschlag durchsetzende Öffnung, insbesondere Gewindeöffnung aufweist und in die Öffnung ein Haltestift eingesetzt, insbesondere eingeschraubt ist. Durch Vorsehen eines derartigen eine Öffnung in die Überwurfmutter durchsetzendes Haltestiftes wird ein unbeabsichtigtes Verdrehen der Überwurfmutter vermieden und gleichzeitig sichergestellt, dass auf den Haltestift keinerlei Belastungen und insbesondere keinerlei senkrecht wirkenden Kräfte aufgebracht werden, sodass ein unbeabsichtigtes Verbiegen, wie dies in den Ausbildungen gemäß dem Stand der Technik der Fall war, des Haltestiftes jedenfalls hintangehalten ist.

Gemäß einer Weiterbildung der Erfindung ist die Vorrichtung so weitergebildet, dass die Hülse und der im Wesentlichen zylindrische Endbereich des Pumpenkolbens mit zusammenwirkenden Verdrehsicherungselementen versehen sind. Durch Vorsehen von Verdrehsicherungselementen in sowohl dem im Wesentlichen zylindrischen Endbereich des Pumpenkolbens als auch der Hülse wird sichergestellt, dass diese Elemente nicht beliebig gegeneinander verdreht werden können und in der Folge nach jeder Betätigung der Fahrradpumpe der Sattel, welcher an der die Fahrradpumpe ausbildenden Sattelstütze festgelegt ist, neu justiert werden muss, was nicht nur einen unnötigen Zeitaufwand bedeutet, sondern insbesondere einem Benutzer daran hindern wird, die Pumpe häufig zu verwenden, da dies einen unnötigen Arbeitsaufwand bedeutet.

Sichere und auch bei höchsten Belastungen zerstörungsfreie Verdrehsicherungselemente sind hierbei gemäß der vorliegenden Erfindung so ausgebildet, dass die Verdrehsichtungselemente aus wenigstens einem Paar von formschlüssig ineinander einfügbaren von der Zylinderform der Hülse und des im Wesentlichen zylindrischen Endbereichs des Pumpenkolbens abweichenden Bereichen, insbesondere Abflachungen gebildet sind. Durch derartige Verdrehsicherungselemente, welche von ineinander formschlüssig einfügbaren von der Zylinderform der Hülse und des im Wesentlichen zylindrischen Endbereichs des Pumpenkolbens abweichenden Bereichen gebildet sind, insbesondere Abflachungen gebildet sind, gelingt es sicherzustellen, dass der Pumpenkolben nur in einer einzigen Position in die Hülse eingesetzt werden kann, welche Position auch der korrekten Ausrichtung des Fahrradsattels entspricht, ohne dass gleichzeitig die Funktionsfähigkeit der Überwurfmutter in irgendeiner Weise beeinträchtigt würde. Durch Vorsehen von zwei Paaren von zusammenwirkenden Verdrehsicherungselementen, insbesondere von zueinander einen Winkel kleiner 180° einschließenden Verdrehsicherungselementen, wird sichergestellt, dass tatsächlich nur eine einzige Position des Fahrradsattels möglich ist und nicht beispielsweise der Fahrradsattel um 180° zu der Betriebsposition versetzt an der Sattelstütze festgelegt wird, wodurch eine besonders rasche und zuverlässige und insbesondere auch für ungeübte Benutzer oder Kinder einfach zu betätigende Vorrichtung zur Verfügung gestellt werden kann.

Weitere ebenso zuverlässig arbeitende und wirkungsvolle Verdrehsicherungselemente sind gemäß der Erfindung so ausgebildet, dass die Verdrehsicherungselemente aus wenigstens einem Paar von ineinander einfügbaren Vorsprüngen und Ausnehmungen gebildet sind. Auch mit einer derartigen Ausbildung der Verdrehsicherungselements kann eine korrekte Position des Fahrradsattels im Bezug auf den Fahrradrahmen zur Verfügung gestellt werden, wobei derartige Verdrehsicherungselemente die Funktionsweise der Festlegungsvorrichtung gemäß der Erfindung in keiner Weise beeinträchtigt und überdies extrem lange Standzeiten ohne jegliche Beeinträchtigung der Funktion ermöglichen.

Die Erfindung wird nachfolgend anhand von in der Zeichnung dargestellten Ausführungsbeispielen näher erläutert. In diesen zeigen:
Fig. 1 eine erste Ausbildung einer Vorrichtung gemäß der Erfindung, und
Fig. 2 eine weitere Ausbildung der Vorrichtung gemäß der Erfindung.

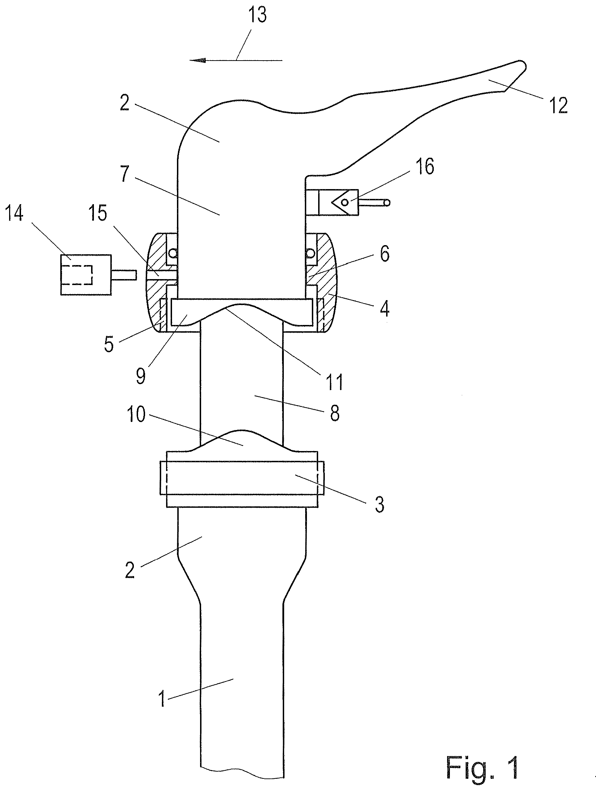

Fig. 1 eine schematische Darstellung eines Teils einer eine Sattelstütze ausbildenden Fahrradpumpe, bei welcher ein einem in der Zeichnung nicht dargestellten Fahrradsattel zugewandter Endbereich einer Hülse 1 mit einem Endbereich 2 ausgestattet ist, welcher einer gegenüber der Hülse 1 vergrößerten Durchmesser aufweist. Dieser Endbereich 2, welcher einen vergrößerten Durchmesser gegenüber der Hülse 1 aufweist, ist überdies mit einem Gewinde 3 versehen, um an diesem Gewinde 3 lösbar, eine Überwurfmutter 4 festlegen zu können.

Die Überwurfmutter 4 weist nicht nur ein zum Gewinde 3 komplementäres Innengewinde 5 auf, sondern überdies einen Bereich verringerten Innendurchmessers 6, welcher als Halteelement bzw. Anschlag der Überwurfmutter 4 an einem verdickten Endbereich 7 des Pumpenkolbens 8 vorgesehen ist. Der verdickte Endbereich 7 des Pumpenkolbens 8 weist überdies ein einen Außendurchmesser 7 noch weiter vergrößerndes Anschlagelement 9 auf, welches mit dem Bereich 6 der Überwurfmutter 4 wechselwirkt und somit ein Verlieren der Überwurfmutter 4 bzw. ein unbeabsichtigtes Verschieben der Überwurfmutter 4 beispielsweise über die Hülse 1 jedenfalls verhindert. Um in einem geschlossenen Zustand, d.h. in einem aneinander anliegenden Zustand der beiden verdickten Endbereiche 7 bzw. 2 der Pumpenelemente ein unbeabsichtigtes Verdrehen der Hülse 1 und des Pumpenkolbens 8 gegeneinander zu vermeiden, ist überdies im Endbereich 2 der Hülse 1 ein Vorsprung 10 ausgebildet, welcher eine abgerundete Kontur aufweist. Dieser Vorsprung 10 wirkt mit einer Ausnehmung 11, welche im verdickten Endbereich 7 des Pumpenkolbens 8 ausgebildet ist, zusammen und verhindert ein Verdrehen des Pumpenkolbens 8 in Bezug auf die Hülse 1. Durch ein derartiges Verdrehsicherungselement wird eine korrekte Positionierung des nicht dargestellten Fahrradsattels gewährleistet. Hierbei sollte der Fahrradsattel so ausgerichtet sein, dass eine Sitzfläche auf dem Fortsatz 12 aufruht oder daran festgelegt ist und in Richtung des Teils 13 ausgerichtet ist.

Für eine weitere Befestigung der Überwurfmutter 4 und insbesondere, um sicherzustellen, dass die Überwurfmutter 4 nicht unbeabsichtigt verdreht wird, ist ein Haltstift 14 vorgesehen, welcher in einer entsprechenden Ausnehmung 15 der Überwurfmutter 4 durch Einsetzen oder Einschrauben festlegbar ist. Der Haltestift 14 kann hierbei, wie dies schematisch dargestellt ist, in seiner nach außen gerichteten freien Endfläche, beispielsweise mit Reflektoren oder einer LED versehen sein, um auch einen praktischen Effekt zu besitzen und beispielsweise die gesetzlich vorgeschriebenen Reflektoren auszubilden. Schließlich ist in Fig. 1 noch schematisch ein Ventil 16 dargestellt, welches für die Abgabe von Druckluft und insbesondere für die Verbindung mit einem entsprechenden nicht dargestellten Befüllschlauch dient.

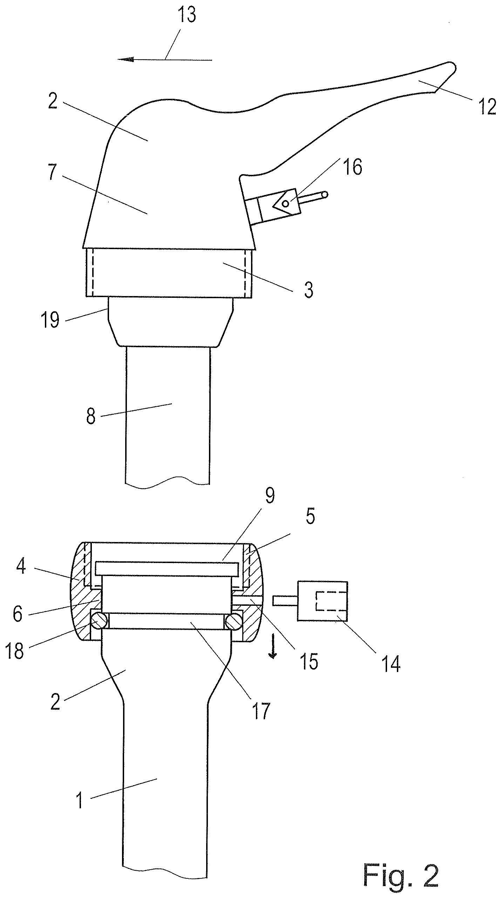

In Fig. 2 sind die Bezugszeichen von Fig. 1 soweit als möglich beibehalten und die Beschreibung von Teilen, welche in Fig. 1 bereits beschrieben wurden, wird in Fig. 2 nicht wiederholt.

Bei der Ausbildung von Fig. 2 ist die Überwurfmutter 4 im verdickten Bereich 2 der Hülse 1 umgeben, angeordnet.

Um ein unbeabsichtigtes Verschieben bzw. Herabfallen der Überwurfmutter 4 insbesondere im geöffneten Zustand derselben in Richtung des Pfeils mit Sicherheit hintanzuhalten, ist zusätzlich in dem verdickten Bereich 2 eine Ringnut 18 ausgebildet, in welche Ringnut 17 beispielsweise ein über die Tiefe der Ringnut 17 vorragender Ring, insbesondere Gummiring oder Sprengring 18 eingesetzt ist, wodurch ein unbeabsichtigtes Verschieben in Richtung des Pfeils 16 der Überwurfmutter 4 vermieden wird.

Bei der Darstellung von Fig. 2 ist der Anschlag 9 im Bereich der Hülse 1 ausgebildet, um ein unbeabsichtigtes Verschieben der Überwurfmutter 4 über den oberen verdickten Endbereich 2 der Hülse 1 zu vermeiden. Für eine sichere Festlegung der Überwurfmutter 4 an dem gegen die Hülse 1 bewegbaren Pumpenkolben 8 ist hierbei das Gewinde 3 zum Festlegen der Überwurfmutter 4 im verdickten Endbereich 7 des Pumpenkolbens 8 ausgebildet.

Schließlich ist bei der Darstellung von Fig. 2 eine abgewandelte Variante einer Verdrehsicherung gewählt, insbesondere sind hierbei sowohl an dem verdickten Endbereich 7 des Pumpenkolbens 8 als auch, wie dies in der Zeichnung nicht erkennbar ist, im verdickten Endbereichs 2 der Hülse 1, Abflachungen vorgesehen, welche miteinander wechselwirken. Die Abflachung 19 im verdickten Endbereich 7 des Pumpenkolbens 8 ist hierbei erkenntlich. Durch das Vorsehen von derartigen Abflachungen 19 wird sichergestellt, dass der Pumpenkolben 8 nur in einer einzigen Position in die Hülse 1 eingesetzt werden kann, wodurch ein unbeabsichtigtes Verdrehen eines an der dafür vorgesehenen Halterung, welche ebenfalls einstückig mit dem oberen Endbereich 7 des Pumpenkolbens 8 ausgebildet ist, festgelegten Sattels mit Sicherheit hintanzuhalten.

Sämtliche weiteren Teile besitzen die in Fig. 1 beschriebene Funktionsweise.

## Patentansprüche

1. Vorrichtung zum lösbaren aneinander Festlegen von zwei gegeneinander bewegbaren Teilen (1, 8) einer eine Sattelstütze ausbildenden Vorrichtung zum Generieren von Druckluft zum Befüllen von Fahrradreifen, wobei die zwei gegeneinander bewegbaren Teile (1, 8) der Sattelstütze aus einer eine Pumpenstange umgebenden Hülse (1) und einem Pumpenkolben gebildet sind, **dadurch gekennzeichnet, dass** ein einem Fahrradsattel zugewandter, im Wesentlichen zylindrischer Endbereich des Pumpenkolbens (8) mit einem gegenüber dem in der Hülse (1) geführten Teil desselben vergrößerten Durchmesser (7) ausgebildet ist, dass der Bereich vergrößerten Durchmessers (7) und ein freier Endbereich (2) der Hülse (1) von einer in einem Endbereich mit einem Innengewinde (5) versehenen Überwurfmutter (4) umgeben sind und das Innengewinde (5) der Überwurfmutter (4) mit einem an der Hülse (1) oder am Bereich vergrößerten Durchmessers (7) des Pumpenkolbens (8) angeordneten Gewinde (3) lösbar verbindbar ist, dass die Überwurfmutter (4) einen dem Innengewinde (5) benachbarten, ihren Innendurchmesser verringernden ringförmigen Anschlag (6) aufweist und dass ein einen Außendurchmesser von entweder der Hülse (1) oder dem Bereich vergrößerten Durchmessers (7) des Pumpenkolbens (8) vergrößernder Anschlag (9) zur Wechselwirkung mit dem Anschlag (6) der Überwurfmutter (4) ausgebildet ist.

2. Vorrichtung nach Anspruch 1 **dadurch gekennzeichnet, dass** die Überwurfmutter (4) die Hülse (1) umgebend angeordnet ist und dass die Hülse (1) beabstandet von dem Bereich vergrößerten Durchmessers ein weiteres den Außendurchmesser der Hülse (1) vergrößerndes Element aufweist.

3. Vorrichtung nach Anspruch 2, **dadurch gekennzeichnet, dass** das weitere den Außendurchmesser der Hülse (1) vergrößernde Element ein rückstellfähiges in eine Nut (17) der Hülse (1) eingelegtes Element (18), insbesondere ein elastischer Ring oder ein Sprengring ist.

4. Vorrichtung nach einem der Ansprüche 1, 2 oder 3, **dadurch gekennzeichnet dass** die Überwurfmutter (4) wenigstens eine den Anschlag (6) durchsetzende Öffnung (15), insbesondere Gewindeöffnung aufweist und in die Öffnung (15) ein Haltestift (14) eingesetzt, insbesondere eingeschraubt ist.

5. Vorrichtung nach einem der Ansprüche 1 bis 5, **dadurch gekennzeichnet, dass** die Hülse und der im Wesentlichen zylindrische Endbereich (7) des Pumpenkolbens (8) mit zusammenwirkenden Verdrehsicherungselementen versehen sind.

6. Vorrichtung nach Anspruch 5, **dadurch gekennzeichnet, dass** die Verdrehsichtungselemente aus wenigstens einem Paar von formschlüssig ineinander einfügbaren von der Zylinderform der Hülse (1) und des im Wesentlichen zylindrischen Endbereichs (7) des Pumpenkolbens (8) abweichenden Bereichen, insbesondere Abflachungen (19) gebildet ist.

7. Vorrichtung nach Anspruch 6, **dadurch gekennzeichnet, dass** die Verdrehsicherungselemente aus wenigstens einem Paar von ineinander einfügbaren, insbesondere eine abgerundete Kontur aufweisenden Vorsprüngen (10) und Ausnehmungen (11) gebildet sind.

## Claims

1. A device for detachably fixing to each other two relatively movable parts (1, 8) of a device for generating compressed air for filling bicycle tires, which device forms a seatpost, wherein the two relatively movable parts (1, 8) of the seatpost are formed by a sleeve (1) surrounding a pump rod and by a pump piston, **characterized in that** a substantially cylindrical end region of the pump piston (8) facing a bicycle saddle is designed to have a diameter (7) enlarged relative to the part of the pump piston guided in the sleeve (1), that the region of enlarged diameter (7) and a free end region (2) of the sleeve (1) are surrounded by a union nut (4) provided with an internal thread (5) in an end region and the internal thread (5) of the union nut (4) is detachably connectable to a thread (3) arranged on the sleeve (1) or on the region of enlarged diameter (7) of the pump piston (8), that the union nut (4) comprises an annular stop (6) located adjacent the internal thread (5) and reducing its inner diameter, and that a stop (9) enlarging an outer diameter of either the sleeve (1) or the region of enlarged diameter (7) of the pump piston (8) is configured for interaction with the stop (6) of the union nut (4).

2. A device according to claim 1, **characterized in that** the union nut (4) is arranged to surround the sleeve (1), and that the sleeve (1), at a distance from the region of enlarged diameter, comprises a further element enlarging the outer diameter of the sleeve (1).

3. A device according to any one of claim 1 or 2, **characterized in that** said further element enlarging the outer diameter of the sleeve (1) is comprised of a resettable element (18) inserted in a groove (17) of the sleeve (1), in particular an elastic ring or snap ring.

4. A device according to any one of claim 1, 2 or 3, **characterized in that** the union nut (4) comprises at least one opening (15), in particular threaded opening, passing through the stop (6) and a holding pin (14) is inserted, in particular screwed, into said opening (15).

5. A device according to any one of claims 1 to 5, **characterized in that** the sleeve and the substantially cylindrical end region (7) of the pump piston (8) are provided with cooperating anti-rotation elements.

6. A device according to claim 6, **characterized in that** the anti-rotation elements are comprised of at least one pair of mutually positively engageable regions, in particular flattenings (19), which deviate from the cylindrical shape of the sleeve (1) and the substantially cylindrical end region (7) of the pump piston (8).

7. A device according to claim 6, **characterized in that** the anti-rotation elements are comprised of at least one pair of mutually engageable projections (10) and recesses (11) having, in particular, rounded contours.

## Revendications

1. Dispositif pour fixer l'une à l'autre de façon amovible deux parties mobiles (1, 8) l'une par rapport à l'autre d'un dispositif réalisant un appui de selle pour la génération d'air comprimé pour le remplissage de pneus de vélo, dans lequel les deux parties mobiles l'une par rapport à l'autre (1, 8) de l'appui de selle sont formées d'une douille (1) entourant une tige de pompe et d'un piston de pompe, **caractérisé en ce qu'**une zone d'extrémité sensiblement cylindrique tournée vers une selle de vélo du piston de pompe (8) est réalisée avec un diamètre (7) agrandi par rapport à la partie guidée dans la douille (1) de celle-ci, **en ce que** la zone de diamètre agrandi (7) et une zone d'extrémité libre (2) de la douille (1) sont entourées par un écrou d'accouplement (4) pourvu dans une zone d'extrémité d'un filet intérieur (5) et le filet intérieur (5) de l'écrou d'accouplement (4) peut être raccordé de manière détachable avec un filet (3) agencé sur la douille (1) ou sur la zone de diamètre agrandi (7) du piston de pompe (8), **en ce que** l'écrou d'accouplement (4) présente une butée (6) annulaire diminuant son diamètre intérieur, contiguë au filet intérieur (5) et **en ce qu'**une butée (9) agrandissant un diamètre extérieur de la douille (1) ou de la zone de diamètre agrandi (7) du piston de pompe (8) est réalisée pour l'interaction avec la butée (6) de l'écrou d'accouplement (4).

2. Dispositif selon la revendication 1, **caractérisé en ce que** l'écrou d'accouplement (4) est disposé autour de la douille (1) et **en ce que** la douille (1) présente un autre élément agrandissant le diamètre extérieur de la douille (1) à distance de la zone de diamètre agrandi.

3. Dispositif selon la revendication 2, **caractérisé en ce que** l'autre élément agrandissant le diamètre extérieur de la douille (1) est un élément (18), inséré dans une rainure (17) de la douille (1), pouvant être rappelé, en particulier un anneau élastique ou un circlip.

4. Dispositif selon l'une des revendications 1, 2 ou 3, **caractérisé en ce que** l'écrou d'accouplement (4) présente au moins une ouverture (15) traversant la butée (6), en particulier ouverture filetée, et une tige de retenue (14) est insérée dans l'ouverture (15), en particulier vissée.

5. Dispositif selon l'une des revendications 1 à 5, **caractérisé en ce que** la douille et la zone d'extrémité (7), sensiblement cylindrique, du piston de pompe (8) sont pourvues d'éléments de blocage en rotation coopérants.

6. Procédé selon la revendication 5, **caractérisé en ce que** les éléments de blocage en rotation sont formés d'au moins une paire de zones pouvant être insérées avec complémentarité de forme l'une dans l'autre, divergeant de la forme cylindrique de la douille (1) et de la zone d'extrémité sensiblement cylindrique (7) du piston de pompe (8), en particulier des aplatissements (19).

7. Procédé selon la revendication 6, **caractérisé en ce que** les éléments de blocage en rotation sont formés d'au moins une paire de saillies (10) et d'évidements (11) insérables les unes dans les autres, présentant en particulier un contour arrondi.
